# EUROPEAN PATENT APPLICATION

(11) **EP 3 388 738 A1**
(43) Date of publication of application: **17.10.2018**
(21) Application number: 18166630.6
(22) Date of filing: 10.04.2018
(51) Int. Cl.: F21S 41/657, F21S 41/29, B60Q 1/068

(54) **LIGHTING APPARATUS AND AUTOMOTIVE VEHICLE**

(30) Priority: 11.04.2017 CN 201720377295 U
(71) Applicant: Valeo Lighting Hubei Technical Center Co Ltd, 430014 Wuhan, Hubei (CN)
(72) Inventor: ZHOU, Haiqing, Wuhan, Hubei 430056 (CN); YANG, Pingwu, Wuhan, Hubei 430056 (CN); CHEN, Si, Wuhan, Hubei 430056 (CN); FAN, Lei, Wuhan, Hubei 430056 (CN)
(74) Representative: Khairallah, Murielle

(57) **Abstract**

The present disclosure provides a lighting apparatus (100), including a support frame (110) including a frame body (111) and a first pivoting structure (113) provided on the frame body; a lighting module (120) including a second pivoting structure (123), which is pivotably engaged with the first pivoting structure such that the lighting module is allowed to pivot about a pivoting axis (O-O') relative to the support frame; and an adjusting and positioning mechanism (130) positioned to be offset from the pivoting axis, connected with the support frame and the lighting module, and configured to adjust and hold a pivoting position of the lighting module relative to the support frame. The present disclosure further provides an automobile vehicle.

## Description

### TECHNICAL FIELD

Embodiments of the present disclosure generally relates to the lighting/signaling field, and particularly, to a lighting apparatus and an automobile vehicle.

### DESCRIPTION OF THE RELATED ART

For a lighting/signaling device of a machine such as an automobile vehicle, its lighting/signaling module often needs to be adjusted in spatial position such that the lighting/signaling module could achieve desired optical function(s). Further, during manufacturing of a product, there will be inevitable process deviations in manufacturing and assembly of the product, and there is also a superposed / cumulative tolerance due to these process deviations, which will result in a deviation of an actual optical module of the lighting/signaling module and a desired optical module. Thus, the lighting/signaling module needs to be adjusted so that it is positioned accurately to reduce or even eliminate the process deviations and the superposed / cumulative tolerance.

For a conventional lighting/signaling device, its lighting/signaling module is generally fixed in position by using at least three adjustment bolts, and is finely adjusted and positioned by adjusting the bolts respectively. Thus, such adjustment mechanism need perform multi-point adjustment operations coordinating with each other, and thereby is relatively complex and high in cost, and could not easily achieve appropriate adjustments for all bolts in a short time.

### SUMMARY

The present disclosure is made to solve or eliminate at least one of the above and other problems and defects in prior arts.

In an aspect, an embodiment of the present disclosure provides lighting apparatus, comprising: a support frame comprising a frame body and a first pivoting structure provided on the frame body; a lighting module comprising a second pivoting structure, which is pivotably engaged with the first pivoting structure such that the lighting module is allowed to pivot about a pivoting axis relative to the support frame; and an adjusting and positioning mechanism positioned to be offset from the pivoting axis, connected with the support frame and the lighting module, and configured to adjust and hold a pivoting position of the lighting module relative to the support frame.

In an embodiment, the pivoting axis is defined by the first pivoting structure of the support frame to extend through a center of a portion of the first pivoting structure engaged with the second pivoting structure, or by the second pivoting structure of the lighting module to extend through a center of a portion of the second pivoting structure engaged with the first pivoting structure.

In an embodiment, the support frame comprises two first pivoting structures located on opposite sides of the frame body, the lighting module comprises two second pivoting structures located on opposite sides of the lighting module and pivotably engaged with the two first pivoting structures respectively, and the pivoting axis is defined by centers of portions of the two second pivoting structures engaged with the first pivoting structures.

In an embodiment, each first pivoting structure comprises a lug shaped structure extending to protrude from the frame body and provided with a pivoting hole, each second pivoting structure is formed in form of a stub shaft protruding outwardly in a direction of the pivoting axis and having a central axis coinciding with the pivoting axis, and the stub shaft is inserted into a corresponding pivoting hole and configured to pivot in the pivoting hole about the pivoting axis under adjustment of the adjusting and positioning mechanism.

In an embodiment, the two first pivoting structures are configured to clamp and hold the second pivoting structures from the opposite sides of the lighting module so as to limit displacement of the lighting module in a direction of the pivoting axis relative to the support frame.

In an embodiment, the support frame further comprises a receiving opening provided between the two first pivoting structures, and the lighting module is configured to be inserted through the receiving opening and partially positioned within the receiving opening.

In an embodiment, a position where the adjusting and positioning mechanism is connected with the lighting module is located to be offset from the pivoting axis, such that the position and centers of the two second pivoting structures form apexes of a triangle.

In an embodiment, the adjusting and positioning mechanism comprises:
an adjusting rod having one end connected to one of the support frame and the lighting module and the other end provided with a threaded portion, and configured to be inserted through a through hole formed in the other one of the support frame and the lighting module such that the threaded portion is partially exposed from the through hole;
a spring fitting over the adjusting rod and positioned between the support frame and the lighting module; and
an adjusting nut threadedly engaged with the threaded portion exposed from the through hole such that compression of the spring is adjusted by changing a position of the adjusting nut on the adjusting rod so as to drive the lighting module by the spring to pivot about the pivoting axis relative to the support frame.

In an embodiment, the adjusting rod is in form of a screw or bolt.

In another aspect, an embodiment of the present disclosure further provides an automobile vehicle, comprising the lighting apparatus described in any of embodiments of the present disclosure.

In embodiments of the present disclosure, the support frame and the lighting module of the lighting apparatus are respectively provided with pivoting structures, which are pivotably engaged with each other such that the lighting module can be pivoted about a pivoting axis defined by the pivoting structure of the support frame or by the pivoting structure of the lighting module, and the adjusting and positioning mechanism is positioned to be offset from the pivoting axis, connected with the support frame and the lighting module, and configured to adjust and hold a pivoting position of the lighting module relative to the support frame. Thereby, a relative pivoting movement between the lighting module and the support frame and about the pivoting axis can be driven only by operating the adjusting and positioning mechanism, that is, only in a single-point adjustment way, thereby enabling accurate, fast and easy adjustment of the position or orientation of the lighting module relative to the support frame.

The above and other objects and advantages of the present disclosure will become more apparent through the following detail description of the present disclosure with reference to the accompanying drawings, which will contribute to the comprehensive understanding of the present invention.

### BRIEF DESCRIPTION OF THE DRAWINGS

Features and advantages of the present disclosure can be understood more clearly with reference to the accompanying drawings, which are exemplary and should not be interpreted as limitation to the present disclosure, and in which:
Fig. 1 is a schematic perspective view of a lighting apparatus according to an embodiment of the present disclosure;
Fig. 2 is a schematic exploded view of a lighting apparatus according to an embodiment of the present disclosure;
Fig. 3 is a schematic side view of a lighting apparatus according to an embodiment of the present disclosure;
Fig. 4A is a top view of a lighting apparatus according to an embodiment of the present disclosure;
Fig. 4B is a sectional view of the lighting apparatus shown in Fig. 4A, taken along a line H-H;
Fig. 4C is a sectional view of the lighting apparatus shown in Fig. 4A, taken along a line V-V; and
Fig. 5 is a schematic perspective view of a support frame of a lighting apparatus according to an embodiment of the present disclosure.

### DETAILED DESCRIPTION OF EMBODIMENTS

Exemplary embodiments of the present disclosure will be further described in detail with reference to the attached drawings. In the description, the same or like reference numbers refer to the same or like elements.

Further, in the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present disclosure, there is provided a lighting apparatus, comprising a support frame, a lighting module and an adjusting and positioning mechanism, the support frame and the lighting module of the lighting apparatus are respectively provided with pivoting structures, which are pivotably engaged with each other such that the lighting module can be pivoted about a pivoting axis defined by the pivoting structure of the support frame or by the pivoting structure of the lighting module, and the adjusting and positioning mechanism is positioned to be offset from the pivoting axis, connected with the support frame and the lighting module, and configured to adjust and hold a pivoting position of the lighting module relative to the support frame. Thereby, a relative pivoting movement between the lighting module and the support frame and about the pivoting axis can be driven only through adjustment operation of the adjusting and positioning mechanism or only by operating the adjusting and positioning mechanism, that is, only in a single-point adjustment way, thereby enabling accurate, fast and easy adjustment of the position or orientation of the lighting module relative to the support frame.

It is noted that although in the present disclosure, the phrase "lighting apparatus" is described as an example, obviously the lighting apparatus may also be referred to as or equivalent to a signaling device. Thus, in this text, the "lighting apparatus" and the "signaling device" may be used interchangeably, unless otherwise explicitly specified.

The following description of exemplary embodiments of the present disclosure made with reference to the attached drawings is intended to illustrate the general inventive concepts of the present disclosure, and should not be interpreted as being limitative to the present disclosure.

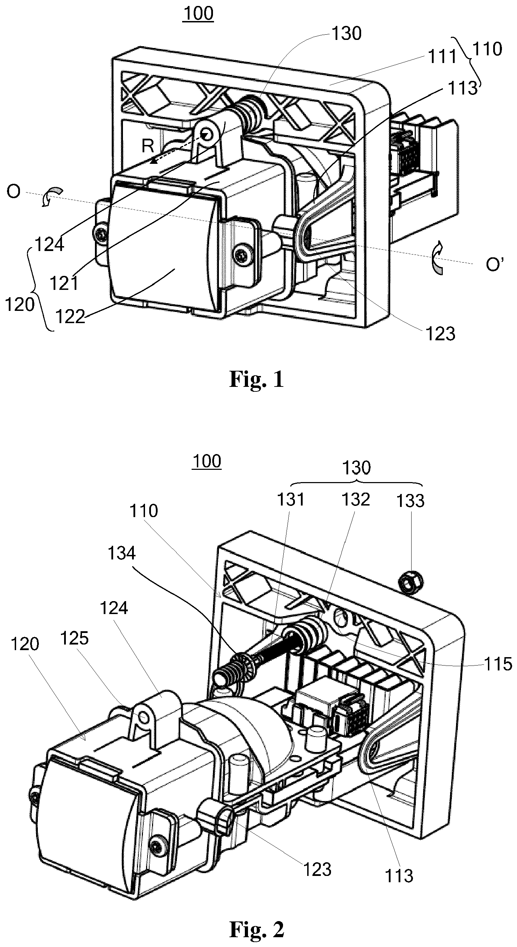

Fig. 1 schematically shows a structure of a lighting apparatus according to an embodiment of the present disclosure. As illustrated, a lighting apparatus 100 comprises a support frame 110, a lighting module 120 mounted on the support frame 11, and an adjusting and positioning mechanism 130. The support frame 110 comprises a frame body 111 and a first pivoting structure 113 provided on the frame body, and the lighting module 120 comprises a second pivoting structure 123, which is pivotably engaged with the first pivoting structure 113 such that the lighting module 120 is allowed to pivot about a pivoting axis O-O' relative to the support frame 110; for example, the lighting module and the support frame can be pivoted relative to each other in a counter-clockwise direction and a clockwise direction (as indicated by an arrow across the axis O-O' in Fig. 1) through engagement of their pivoting structures. In embodiment of the present disclosure, the adjusting and positioning mechanism 130 is positioned to be offset from the pivoting axis O-O', connected with the support frame 110 and the lighting module 120, and is operable to drive the lighting module 120 to pivot about the pivoting axis O-O' relative to the support frame 110, thereby adjusting and holding a pivoting position of the lighting module 120 relative to the support frame 110.

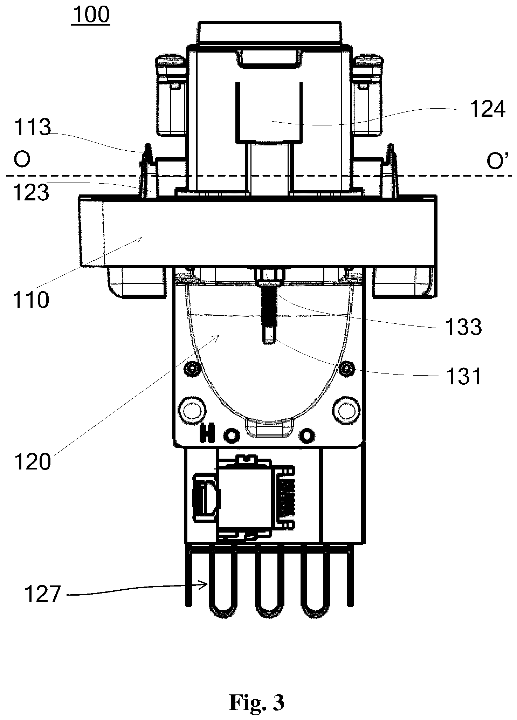

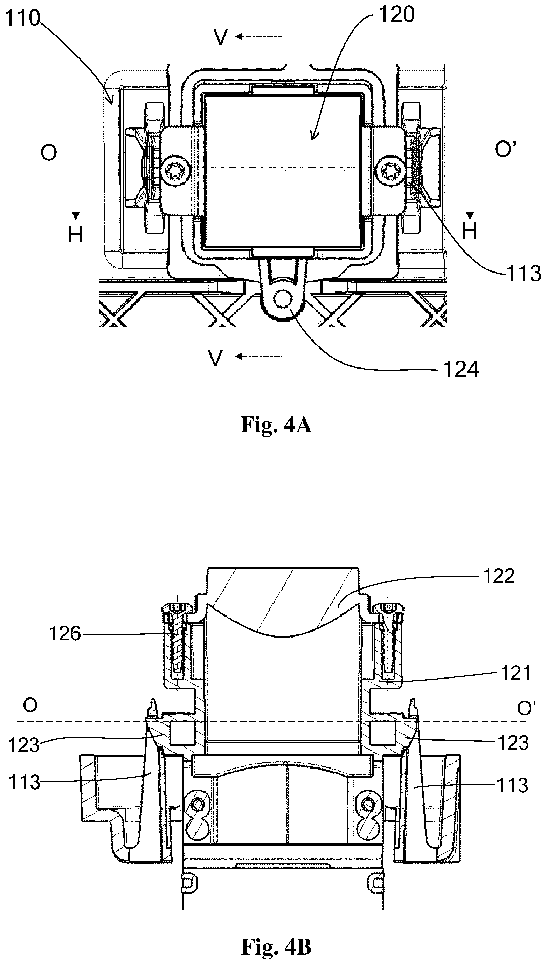

In the present disclosure, specific forms/ structures of the support frame and the lighting module may be designed as required, and will not be particularly limited herein. Exemplarily, the support frame may be a housing fixed to an auto lamp or other lighting apparatus. In the embodiments shown in the figures, the lighting module 120 comprises a housing 121, and an optical module 122, for example, a structure not shown, such as a light emitting element, a lens or the like, mounted in the housing 121, and the optical module 122 is fixed onto the housing 121 by for example bolts 126 (see Fig. 4B). In some examples, as desired, the lighting module 120 may also comprises a radiator 127 (see Fig. 3) for radiating heat from the optical module 122 or a heat generating element therein.

In embodiments of the present disclosure, the support frame and the lighting module are respectively provided with pivoting structures, which are pivotably engaged with each other, and correspondingly, the pivoting axis about which the lighting module is pivoted relative to the support frame is defined by the pivoting structure of the support frame or by the pivoting structure of the lighting module, for example, defined by a center of a portion where the pivoting structures are engaged with each other, or extends through the center. In illustrated embodiments, the pivoting axis O-O' is defined by a center of a portion where the pivoting structure 123 of the lighting module 120 is engaged with the pivoting structure 113 or extends through the center of the portion where the pivoting structure 123 and the pivoting structure 113 are engaged with each other, and the pivoting axis O-O' may be located outside or inside of the frame body 111 of the support frame 110, depending on the specific form of the pivoting structure. For example, as shown in Fig. 1, 3 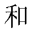 4B, the pivoting axis O-O' extends through the lighting module 120 and is located outside of the frame body 111. Hereinafter, the pivoting axis about which the lighting module is pivoted relative to the support frame and which is defined by the pivoting structure of the lighting module will be described only as an example, and it will be understood by those skilled in the art that the following description, if being adaptively adjusted or changed, will also applicable to a case where the pivoting axis about which the lighting module is pivoted relative to the support frame is defined by the pivoting structure of the support frame.

Referring to Figs. 1, 3, 4A, 4B and 5, the support frame 110 comprises two first pivoting structures 113 located on opposite sides of the frame body 111, the lighting module 120 correspondingly comprises two second pivoting structures 123 located on opposite sides of the lighting module (for example, on opposite sides of the housing 121) and pivotably engaged with the two first pivoting structures 113 respectively, and the pivoting axis O-O'is defined by centers of portions of the two second pivoting structures 123 engaged with the first pivoting structures 113.

In an exemplary embodiment, as shown in Figs. 1, 2 and 5, each first pivoting structure 113 may comprise a lug shaped structure extending to protrude from the frame body 111 towards the second pivoting structure 123, and the two lug shaped structures extend substantially in parallel or slightly slantways. The lug shaped structure is provided with a pivoting hole 114 at, for example, an end or a substantially center position thereof, and each second pivoting structure 123 is in a form of a stub shaft or protrusion protruding outwardly in a direction of the pivoting axis O-O' and having a central axis coinciding with or consistent with the pivoting axis O-O'. In an example, the stub shaft or protrusion 123 is inserted into a corresponding pivoting hole 114, and is configured to be pivoted in the pivoting hole 114 about the pivoting axis O-O' under adjustment of the adjusting and positioning mechanism 130, as described below. It will be appreciated that the engagement between the pivoting structure of the support frame and the pivoting structure of the lighting module may also be implemented by other suitable pivotable connection. Exemplarily, the pivoting axis O-O' may also be defined by a center of the pivoting hole 114 or extend through the center of the pivoting hole 114.

In an embodiment, the two first pivoting structures 113 of the support frame 110 are configured to clamp and hold the corresponding second pivoting structures 123 from the opposite sides of the lighting module 120 so as to limit displacement or offset of the lighting module 120 in a direction of the pivoting axis O-O' relative to the support frame 110. For example, the first pivoting structure 113 may be an elastic structure, and a distance between inner sides of the two first pivoting structures 113 facing each other is at least slightly smaller than a distance between outmost ends of the second pivoting structures 123 such that the second pivoting structures 123 are clamped by the first pivoting structures 113 after the first pivoting structures 113 are slightly deformed outwards, thereby the lighting module 120 can be held by a suitable elastic force or holding force from the first pivoting structures.

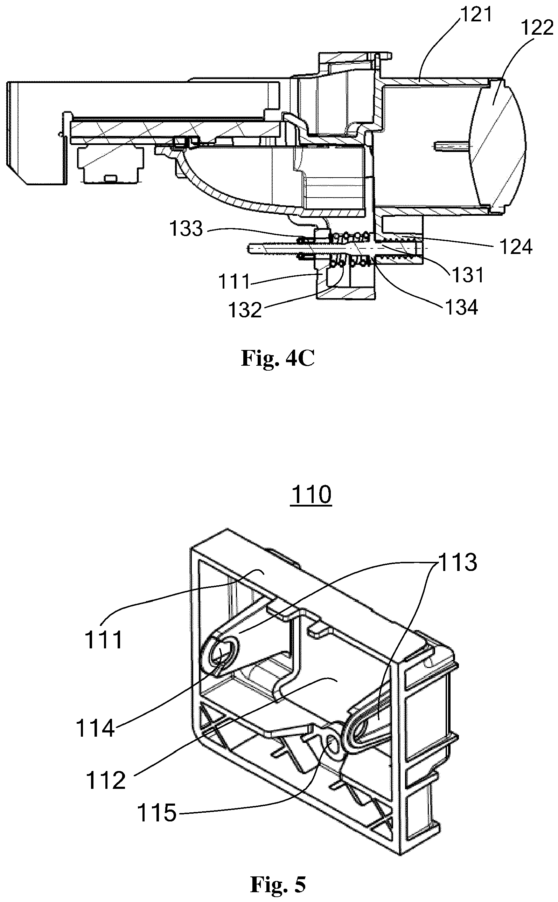

As illustrated, the support frame 110 further comprises a receiving opening 112 (for example, see Fig. 5) provided between the two first pivoting structures 113, and the lighting module 120 is configured to be inserted through the receiving opening 112 and partially positioned within the receiving opening 112. An inner diameter or side of the receiving opening 112 is slightly larger than a size of an outer profile of the lighting module 120, such that the lighting module 120 can be suitably pivoted in the receiving opening 112.

In embodiments of the present disclosure, in the case where the pivoting axis is defined by the centers of the two second pivoting structure of the lighting module, a position where the adjusting and positioning mechanism is connected with the lighting module is located to be offset from the pivoting axis, such that the position and the centers of the two second pivoting structures form apexes of a triangle(for example, an isosceles triangle), thereby a stable positioning of the lighting module relative to the support frame can be achieved through three-point balance. Exemplarily, as shown in Figs. 1, 2, 4A and 4C, the lighting module 120 is provided, at a side thereof different from or adjacent to a side thereof where the two second pivoting structures 123 are located, with a connection structure 124 connected with the adjusting and positioning mechanism 130. In an example, the pivoting axis O-O' is located within a plane defined a center of the connection structure 124 and the centers of the two second pivoting structures 123, and the plane is substantially parallel to a plane defined by the support frame 110 and perpendicular to a direction in which the lighting module 120 is inserted into the receiving opening 112 of the support frame 110, such that the lighting module 120 can be adjusted to a desired position or orientation relative to the support frame 110.

In an embodiment, as shown in Figs. 2 and 4C, the adjusting and positioning mechanism 130 comprises an adjusting rod 131, a spring 132 fitting over the adjusting rod 131, and an adjusting nut 133, the adjusting rod 131 has one end connected, for example, detachably or in a threaded engagement way, to the lighting module 120, that is, to the connection structure 124. In an example, an end of the adjusting rod 131 is inserted into a through hole 115 (see Fig. 2) provided in the connection structure 124, and the connection hole 125 may be in a form of a blind hole or through hole. In another example, the adjusting rod 131 is provided with a threaded portion at an end thereof, for example, the adjusting rod 131 may be a bolt or screw and is configured to be inserted through the through hole 115 formed in the support frame 110(specifically, formed in the frame body 111), such that the threaded portion is partly exposed from the through hole 11, for example, exposed from a side of the frame body 111 facing away from the connection structure 124 of the lighting module 120, thereby the adjustment nut 133 is threaded and engaged with the threaded portion exposed from the through hole 15.

The spring 132 fitting over the adjusting rod 131 is positioned between the support frame 110 and the lighting module 120, exemplarily between the connection structure 124 and a side of the frame body 111 facing the connection structure 124. An inner diameter or size of the through hole 115 may be slightly larger than an outer diameter of the adjusting rod 131, such that the adjusting rod 131 can be reciprocally moved through the through hole 115(for example, as indicated by a dashed double-headed arrow R shown in Fig. 1), but the inner diameter or size of the through hole 115 is smaller than an outer diameter of the spring 132 fitting over the adjusting rod 131 such that an end of the spring 132 abuts against on the side of the frame body 111 facing the connection structure 124. In another example, the adjusting rod 131 is provided with a stop portion 134 (as shown in Figs. 2 and 4C), the other end of the spring 132 abuts against the stop portion 134, and after assembly, the stop portion 134 abuts against on the connection structure 124 of the lighting module 120. Thereby, a compression state of the spring 132 abuting against the lighting module 120 and the support frame 110 may be adjusted by changing a position of the adjustment nut 133 on the adjusting rod 131, for example, by screwing up or loosening the nut 133, thereby only by operating the nut 133, the lighting module 120 can be driven by the elastic force of the spring 132 to pivot clockwise or anticlockwise about the pivoting axis O-O' relative to the support frame 110, enabling convenient fine adjustment and positioning of the lighting module.

In embodiments of the present disclosure, the lighting apparatus may be a lamp, such as a headlight or the like, of an automobile vehicle, or may be also a lighting/signaling device for use in other machine or equipment.

An embodiment of the present disclosure further provides an automobile vehicle, comprising the lighting apparatus described in any of the embodiments of the present disclosure.

Although several exemplary embodiments have been shown and described, it would be appreciated by those skilled in the art that various changes or modifications may be made in these embodiments without departing from the principle and spirit of the disclosure, the scope of which is defined in the claims and their equivalents.

## Claims

1. A lighting apparatus (100), comprising:
a support frame (110) comprising a frame body (111) and a first pivoting structure (113) provided on the frame body;
a lighting module (120) comprising a second pivoting structure (123), which is pivotably engaged with the first pivoting structure such that the lighting module is allowed to pivot about a pivoting axis (O-O') relative to the support frame; and
an adjusting and positioning mechanism (130) positioned to be offset from the pivoting axis, connected with the support frame and the lighting module, and configured to adjust and hold a pivoting position of the lighting module relative to the support frame.

2. The lighting apparatus according to claim 1, wherein
the pivoting axis is defined by the first pivoting structure of the support frame to extend through a center of a portion of the first pivoting structure engaged with the second pivoting structure, or by the second pivoting structure of the lighting module to extend through a center of a portion of the second pivoting structure engaged with the first pivoting structure.

3. The lighting apparatus according to claim 1 or 2, wherein
the support frame comprises two first pivoting structures located on opposite sides of the frame body, the lighting module comprises two second pivoting structures located on opposite sides of the lighting module and pivotably engaged with the two first pivoting structures respectively, and the pivoting axis is defined by centers of portions of the two second pivoting structures engaged with the first pivoting structures.

4. The lighting apparatus according to claim 3, wherein
each first pivoting structure comprises a lug shaped structure extending to protrude from the frame body and provided with a pivoting hole (114),
each second pivoting structure is formed in form of a stub shaft protruding outwardly in a direction of the pivoting axis and having a central axis coinciding with the pivoting axis, and
the stub shaft is inserted into a corresponding pivoting hole and configured to pivot in the pivoting hole about the pivoting axis under adjustment of the adjusting and positioning mechanism.

5. The lighting apparatus according to claim 3, wherein
the two first pivoting structures are configured to clamp and hold the second pivoting structures from the opposite sides of the lighting module so as to limit displacement of the lighting module in a direction of the pivoting axis relative to the support frame.

6. The lighting apparatus according to claim 3, wherein
the support frame further comprises a receiving opening provided between the two first pivoting structures,
the lighting module is configured to be inserted through the receiving opening and partially positioned within the receiving opening.

7. The lighting apparatus according to claim 3, wherein
a position (124, 125) where the adjusting and positioning mechanism is connected with the lighting module is located to be offset from the pivoting axis, such that the position and centers of the two second pivoting structures form apexes of a triangle.

8. The lighting apparatus according to any one of claims 1, 2 and 4-7, wherein the adjusting and positioning mechanism comprises:
an adjusting rod (131) having one end connected to one of the support frame and the lighting module and the other end provided with a threaded portion, and configured to be inserted through a through hole (115) formed in the other one of the support frame and the lighting module such that the threaded portion is partially exposed from the through hole;
a spring (132) fitting over the adjusting rod and positioned between the support frame and the lighting module; and
an adjusting nut (133) threadedly engaged with the threaded portion exposed from the through hole such that compression of the spring is adjusted by changing a position of the adjusting nut on the adjusting rod so as to drive the lighting module by the spring to pivot about the pivoting axis relative to the support frame.

9. The lighting apparatus according to claim 8, wherein the adjusting rod is in form of a screw or bolt.

10. An automobile vehicle, comprising the lighting apparatus of any one of claims 1 to 9.
